# EUROPEAN PATENT SPECIFICATION

(11) **EP 4 255 107 B1**
(45) Date of publication and mention of the grant of the patent: **17.06.2026**
(21) Application number: 23162521.1
(22) Date of filing: 17.03.2023
(51) Int. Cl.: H05B 3/26, A24F 40/10, A24F 40/40, A24F 40/44, A24F 40/46, A24F 40/70, A61M 15/00, C04B 38/00, C04B 35/64, C04B 38/06, C04B 111/00

(54) **ELECTRONIC VAPORIZATION DEVICE AND VAPORIZATION CORE THEREOF, POROUS BODY, AND MANUFACTURING METHOD OF POROUS BODY**
ELEKTRONISCHE VERDAMPFUNGSVORRICHTUNG UND VERDAMPFUNGSKERN DAFÜR, PORÖSER KÖRPER UND HERSTELLUNGSVERFAHREN FÜR PORÖSEN KÖRPER
DISPOSITIF DE VAPORISATION ÉLECTRONIQUE ET SON NOYAU DE VAPORISATION, CORPS POREUX ET PROCÉDÉ DE FABRICATION DE CORPS POREUX

(30) Priority: 31.03.2022 CN 202210336213
(43) Date of publication of application: 04.10.2023
(60) Divisional application: 26168233.0
(73) Proprietor: Hainan Moore Brothers Technology Co., Ltd., Hainan 571900 (CN)
(72) Inventor: CHEN, Feng, Hainan, 571900 (CN); LI, Bo, Hainan, 571900 (CN); ZHANG, Yaohua, Hainan, 571900 (CN); LONG, Jicai, Hainan, 571900 (CN); CHEN, Bing, Hainan, 571900 (CN); ZHOU, Hongming, Hainan, 571900 (CN)
(74) Representative: Westphal, Mussgnug & Partner, Patentanwälte mbB

(56) References cited:
- EP-A1- 3 615 114
- WO-A1-2019/137099
- WO-A1-2021/027417
- CN-A- 109 721 344
- CN-A- 109 875 123
- US-A- 4 777 153

## Description

### FIELD

The present invention relates to the field of electronic vaporization, and more specifically, to an electronic vaporization device and a vaporization core thereof, a porous body, and a manufacturing method of the porous body.

### BACKGROUND

An electronic vaporization device in the related technology usually includes a liquid storage cavity for accommodating a liquid aerosol-generation substrate and a vaporization core in connection with the liquid storage cavity in a liquid guiding manner. An energized vaporization core can generate heat to heat and vaporize the liquid aerosol-generation substrate, to form an aerosol. The vaporization core is a core component of the electronic vaporization device, and in the related technologies, most of the vaporization cores use a ceramic vaporization core. However, in the related technologies, the comprehensive performance of the ceramic vaporization core is relatively poor, for example, there are defects such as a low e-liquid guiding rate, prone to dry burning failure, and a short service life.

Publications CN 109 721 344 A, CN 109 875 123 A, WO 2019/137099 A1, US 4 777 153 A, EP 3 615 114 A1 and WO 2021/027417 A1 are considered to be relevant to the present application. Thereby CN 109 721 34 A discloses a porous ceramic body comprising a plurality of stacked ceramic layers, each of the ceramic layers having pores, the porous ceramic body comprising a bottom layer and a top layer, the pores of the porous ceramic having a pore size increasing from the bottom layer to the top layer.

### SUMMARY

The technical problems to be resolved in the present invention is to provide an improved electronic vaporization device and a vaporization core thereof, a porous body, and a manufacturing method of the porous body. This problem is solved by a porous body having the features of claim 1, a manufacturing method of the porous body having the features of claim 11, a vaporization core having the features of claim 14 and an electronic vaporization device having the features of claim 15. Preferred embodiments are the subject matter of the dependent claims.

To resolve the foregoing technical problems, the present invention provides a porous body for an electronic vaporization device, wherein the porous body includes a first surface, a second surface opposite the first surface, and at least two unit layers stacked arranged along the direction from the first surface to the second surface, one of the at least two unit layers includes a liquid storage advantage layer and a liquid locking advantage layer stacked together with the liquid storage advantage layer, and another one of the at least two unit layers includes at least the liquid storage advantage layer or the liquid locking advantage layer.

Each unit layer of the at least two unit layers includes the liquid storage advantage layer and the liquid locking advantage layer stacked together with the liquid storage advantage layer, and the liquid storage advantage layers and the liquid locking advantage layers of the at least two unit layers are stacked together along the direction from the first surface to the second surface.

In some embodiments, the thickness of the liquid locking advantage layer ranges from 10 µm to 200 µm.

In some embodiments, the thickness of the porous body ranges from 0.8 mm to 3.0 mm.

In some embodiments, the average porosity of the porous body ranges from 50% to 75%.

In some embodiments, the thickness of each unit layer ranges from 0.1 mm to 1.5 mm.

In some embodiments, the liquid storage advantage layer includes a large-pore-size structure layer, the liquid locking advantage layer includes a small-pore-size structure layer, and the average pore size of the large-pore-size structure layer is 1.5 to 2.5 times of the average pore size of the small-pore-size structure layer.

In some embodiments, the liquid storage advantage layer includes a large-pore-size structure layer, the liquid locking advantage layer includes a small-pore-size structure layer, the average pore size of the large-pore-size structure layer ranges from 50 µm to 150 µm, and the average pore size of the small-pore-size structure layer ranges from 20 µm to 100 µm.

In some embodiments, the liquid storage advantage layer includes a high porosity layer, the liquid locking advantage layer includes a low porosity layer, and the porosity of the high porosity layer is 1.2 to 2 times of the porosity of the low porosity layer.

In some embodiments, the liquid storage advantage layer includes a high porosity layer, the liquid locking advantage layer includes a low porosity layer, the porosity of the high porosity layer ranges from 55% to 90%, and the porosity of the low porosity layer ranges from 45% to 70%.

In some embodiments, the porous body is one or a combination of more than one of porous alumina ceramic, porous silicon oxide, porous cordierite, porous silicon carbide, porous silicon nitride, porous mullite, and composite porous ceramic.

A manufacturing method of the porous body is provided, including the following steps:
(A) providing at least two pairs of green compacts with different porosities or different pore sizes;
(B) stacking the at least two pairs of green compacts alternately to form a green compact assembly; and
(C) co-firing the green compact assembly.

In some embodiments, the green compacts in the step (A) are formed by flow casting or extrusion.

In some embodiments, among the green compacts in the step (A), some of the green compacts are formed by flow casting, and some of the green compacts are formed by extrusion or injection molding.

A vaporization core is provided for an electronic vaporization device, including a heating body and further including the foregoing porous body, wherein the heating body is arranged on the surface of the liquid storage advantage layer or the liquid locking advantage layer of one of the at least two unit layers.

In some embodiments, the heating body is a porous heating film or a metal heating sheet.

An electronic vaporization device is provided, including a liquid storage cavity and a vaporization cavity, and further including the foregoing vaporization core, wherein the surface of the porous body on which the heating body is arranged is in communication with the vaporization cavity in an air guiding manner, and the other surface of the porous body opposite to the surface on which the heating body is arranged is in communication with the liquid storage cavity in a liquid guiding manner.

Beneficial effects of the present invention are as follows: The porous body includes a liquid storage advantage layer and a liquid locking advantage layer arranged alternately, which can realize a steeper gradient drop and provide a stronger heat and mass transfer driving force.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 is a longitudinal cross-sectional view of an electronic vaporization device according to some embodiments of the present invention.
FIG. 2 is a three-dimensional schematic structural diagram of a vaporization core shown in FIG. 1 with a bottom facing upward.
FIG. 3 is a three-dimensional schematic structural diagram of a heating body of a vaporization core shown in FIG. 1.
FIG. 4 is a schematic longitudinal sectional structural view of a vaporization core shown in FIG. 1.
FIG. 5 is an electron microscope diagram of a porous body of a vaporization core shown in FIG. 1.
FIG. 6 is a comparison diagram of liquid guiding test data for a porous body of a vaporization core shown in FIG. 1.
FIG. 7 is an electron microscope diagram of a vaporization core shown in FIG. 1.
FIG. 8 is a schematic longitudinal sectional structural view of a vaporization core according to some other embodiments of the present invention.
FIG. 9 is a schematic longitudinal sectional structural view of a vaporization core according to still some other embodiments of the present invention.
FIG. 10 is an electron microscope diagram of the vaporization core shown in FIG. 9.
FIG. 11 is a schematic longitudinal sectional structural view of a vaporization core according to yet some other embodiments of the present invention.

### DETAILED DESCRIPTION

To provide a clearer understanding of the technical features, objectives, and effects of the present invention, specific implementations of the present invention are described in detail with reference to the accompanying drawings.

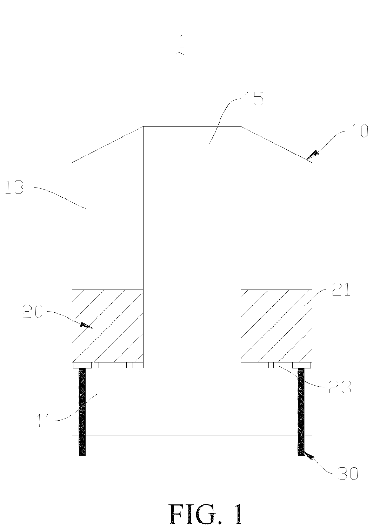

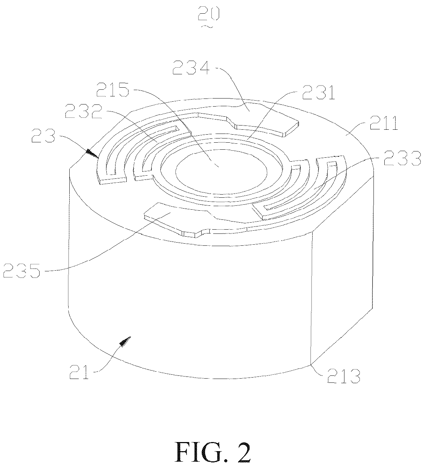

FIG. 1 and FIG. 2 show an electronic vaporization device 1 according to some embodiments of the present invention, and the electronic vaporization device 1 may be configured to heat and vaporize a liquid aerosol-generation substrate for inhalation by a user. In some embodiments, the electronic vaporization device 1 is in a shape of a flat column for convenience of hand holding. In some embodiments, the electronic vaporization device 1 includes a housing 10, a vaporization core 20 and a pair of electrodes 30. The housing 10 is configured to form a vaporization cavity 11, a liquid storage cavity 13, and an air outlet channel 15. The vaporization core 20 is arranged in the housing 10, and configured to heat and vaporize the liquid aerosol-generation substrate.

The pair of electrodes 30 is electrically connected to the vaporization core 20, and configured to electronically connect the vaporization core 20 to a battery device (not shown in the figure). It may be understood that the electronic vaporization device 1 is not limited to the shape of a flat column, but may also be in a shape of a cylinder, a square column, or other irregular shapes.

As shown in FIG. 1, in some embodiments, the housing 10 may include a vaporization cavity 11, a liquid storage cavity 13, and an air outlet channel 15. The vaporization cavity 11 is arranged on a bottom end of the housing 10, and configured to accommodate an aerosol and mix the aerosol with ambient air. The air outlet channel 15 is longitudinally arranged in the housing 10 and is in communication with the vaporization cavity 11, and configured to export a mixture of the aerosol and the air. The liquid storage cavity 13 is arranged on an upper part of a vaporization core 12 and surrounds the air outlet channel 15, and configured to accommodate the liquid aerosol-generation substrate. An upper end of the housing 10 may form a flat suction nozzle in communication with the air outlet channel 15 to facilitate inhalation by the user.

As shown in FIG. 2, in some embodiments, the vaporization core 20 may include a porous body 21 and a heating body 23.

The porous body 21 is configured to transmit the liquid aerosol-generation substrate in the liquid storage cavity 13 to the heating body 23 by a capillary force. The heating body 23 is arranged on the porous body 21, and configured to generate a high temperature after being energized, to heat and vaporize the liquid aerosol-generation substrate.

In some embodiments, the porous body 21 may be in a shape of a column, which may include a first surface 211, a second surface 213, and a center channel 215. The first surface 211 may be arranged on a bottom end of the porous body 21, and configured to install the heating body 23, to form a vaporization surface. The second surface 213 and the first surface 211 are arranged opposite to each other, and the second surface may be arranged on a top end of the porous body 21, and configured to be in communication with the liquid storage cavity 13 to form a liquid absorbing surface. The center channel 215 is arranged in the porous body 21 and extends from the first surface 211 to the second surface 213, and configured to communicate the vaporization cavity 11 with the air outlet channel 15. It may be understood that, the porous body 21 is not limited to the shape of a column, but may also be in a shape of a flat plate.

In some embodiments, the heating body 23 may be designed in a shape of a circle or a quasi-circle, which is more conducive to a full use of a heating surface. The length of an arc-shaped heating portion may be extended through a surrounding design of the arc-shaped heating portion in a small size, to obtain a higher resistance value. The surrounding design of the arc-shaped heating portion of the heating body 23 may fully gather heat. Combined with the small size brought by the shape of a circle or a quasi-circle, the temperature in the arc-shaped heating portion is further increased to produce more vapor.

In some embodiments, the heating body 23 may include a first heating unit 231, an arc-shaped second heating unit 232, and an arc-shaped third heating unit 233. The first heating unit 231 is arranged on the first surface 211 of the porous body 21 and configured to generate heat in a middle part. The second heating unit 232 and the third heating unit 233 are distributed on two opposite sides of the first heating unit 231 at intervals and symmetrically, and share a circle center with the first heating unit 231 for generating heat on both sides respectively. The second heating unit 232 and the third heating unit 233 are electrically connected to ends on different sides of the first heating unit 231 respectively.

In some embodiments, the vaporization core 20 may be integrally formed by the heating body 23 and the porous body 21 through binder removal and sintering; or the vaporization core may be formed by first preparing the porous body 21 and then preparing the heating body 23 through binder removal and sintering. The shapes of the porous body 21 and the heating body 23 may be not limited.

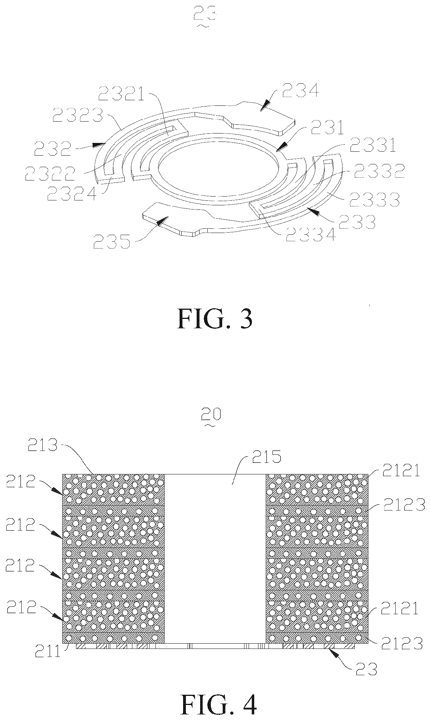

Referring to FIG. 3, in some embodiments, the first heating unit 231 may be in a shape of a circular ring, which may include a center through hole 2310, where the center through hole 2310 is in communication with the center channel 215 of the porous body 21. The center through hole 2310 realizes a direct connection between the vaporization cavity 11 and the suction nozzle. During inhalation, vapor is directly transmitted from the center through hole 2310 to the suction nozzle. An air passage is simple, which can not only alleviate condensation of vapor in the air passage, reduce blockage and leakage, and improve an amount of vapor, but also make vapor enter a mouth of an inhaler directly and quickly, to ensure an inhalation taste.

In some embodiments, the second heating unit 232 may include a first heating portion 2321, a second heating portion 2322, and a third heating portion 2323, which are also roughly arc-shaped. The first heating portion 2321, the second heating portion 2322, and the third heating portion 2323 share a circle center with the first heating unit 231 and are arranged in parallel and at intervals in sequence. It may be understood that the number of arc-shaped heating portions of the second heating unit 232 is not limited to three, but may be two or more than three.

The length of at least one arc-shaped heating portion close to the center through hole 2310 in at least two arc-shaped heating portions of the second heating unit 232 is less than the length of at least one arc-shaped heating portion away from the center through hole 2310. In some implementations, the first heating portion 2321, the second heating portion 2322, and the third heating portion 2323 are sequentially away from the center through hole 2310; and the length of the first heating portion 2321 is less than the length of the second heating portion 2322, and the length of the second heating portion 2322 is less than the length of third heating portion 2323. Sequentially increasing lengths can increase a heating area of the heating portions and further increase the amount of vapor.

In some embodiments, the second heating unit 232 may also include three fourth heating portions 2324 that are roughly strip-shaped, two of the three fourth heating portions 2324 electrically connect the first heating portion 2321, the second heating portion 2322, and the third heating portion 2323 in series in sequence, and two ends of the other of the three fourth heating portions 2324 are respectively electrically connected to the first heating unit 231 and the first heating portion 2321.

In some embodiments, the third heating unit 233 may include a fifth heating portion 2331, a sixth heating portion 2332, and a seventh heating portion 2333, which are also roughly arc-shaped. The fifth heating portion 2331, the sixth heating portion 2332, and the seventh heating portion 2333 share a circle center with the first heating unit 231 and are arranged in parallel and at intervals in sequence. It may be understood that the number of arc-shaped heating portions of the third heating unit 233 is not limited to three, but may be two or more than three.

The length of at least one arc-shaped heating portion close to the center through hole 2310 in at least two arc-shaped heating portions of the third heating unit 233 is less than the length of at least one arc-shaped heating portion away from the center through hole 2310. In some implementations, the fifth heating portion 2331, the sixth heating portion 2332, and the seventh heating portion 2333 are sequentially away from the center through hole 2310; and the length of the fifth heating portion 2331 is less than the length of the sixth heating portion 2332, and the length of the sixth heating portion 2332 is less than the length of seventh heating portion 2333. Sequentially increasing lengths can increase a heating area of the heating portions and further increase the amount of vapor.

In some embodiments, the third heating unit 233 may also include three eighth heating portions 2334 that are roughly strip-shaped, two of the three eighth heating portions 2334 electrically connect the fifth heating portion 2331, the sixth heating portion 2332, and the seventh heating portion 2333 in series in sequence, and two ends of the other of the three eighth heating portions 2334 are respectively electrically connected to the first heating unit 231 and the fifth heating portion 2331.

One end of the other of the three fourth heating portions 2324 and one end of the other of the three eighth heating portions 2334 are respectively connected to two opposite sides of the first heating unit 231, so as to electrically connect the second heating unit 232 and the third heating unit 233 to the first heating unit 231.

As shown in FIG. 2 and FIG. 3, in some embodiments, the heating body 23 may further include a first electrode connecting unit 234 and a second electrode connecting unit 235. The first electrode connecting unit 234 and the second electrode connecting unit 235 are arranged on the other two opposite sides of the first heating unit 231 in parallel and at intervals, connected to the other ends of the third heating portion 2323 and the seventh heating portion 2333 respectively, and configured to be electrically connected to the pair of electrodes 30.

Referring to FIG. 4, in some embodiments, the porous body 21 may include n (2□n□30) unit layers 212, and these unit layers 212 are stacked along a direction from the first surface 211 to the second surface 213. Each unit layer 212 may include a liquid storage advantage layer 2121 away from the first surface 211 and a liquid locking advantage layer 2123 close to the first surface 211, so that the liquid storage advantage layer 2121 and the liquid locking advantage layer 2123 of the porous body 21 are alternately arranged, to realize a steeper gradient drop than that of a porous body of the same thickness with a single porosity, so as to provide a stronger heat and mass transfer driving force and provide a faster liquid supplying capability for inhalation.

In some embodiments, the thickness of the porous body 21 (a distance from the first surface 211 to the second surface 213) may range from 0.8 mm to 3.0 mm, and an average porosity thereof may range from 50% to 75%. The thickness of each unit layer 212 may range from 0.10 mm to 1.5 mm, and the thickness of the liquid locking advantage layer 2123 of each unit layer 212 may range from 10 µm to 200 µm.

It may be understood that, in some embodiments, the unit layers 212 of the porous body 21 are not limited to including both the liquid storage advantage layer 2121 and the liquid locking advantage layer 2123, and part of the unit layers 212 may include either the liquid storage advantage layer 2121 or the liquid locking advantage layer 2123.

As shown in FIG. 4, in the embodiments, the liquid storage advantage layer 2121 may be a high porosity layer, and the liquid locking advantage layer 2123 may be a low porosity layer, where the liquid locking advantage layer 2123 provides the porous body 21 with a stronger support and liquid locking function than the liquid storage advantage layer 2121; and the liquid storage advantage layer 2121 provides the porous body 21 with functions such as a larger amount of liquid storage, faster liquid supplying, and stronger heat insulation than the liquid locking advantage layer 2123, so as to reduce a heat loss and provide a higher energy utilization rate for the vaporization core 20.

In some embodiments, a porosity of the liquid storage advantage layer 2121 is 1.2 to 2 times of a porosity of the liquid locking advantage layer 2123. In some embodiments, the porosity of the liquid storage advantage layer 2121 may range from 55% to 90%, and the porosity of the liquid locking advantage layer 2123 may range from 45% to 70%.

In some embodiments, the porous body 21 may be porous alumina ceramic, porous silicon oxide, porous cordierite, porous silicon carbide, porous silicon nitride, porous mullite, or composite porous ceramic formed integrally. It may be understood that the porous body 21 is not limited thereto, and may also be made of other materials suitable for flow casting or coating.

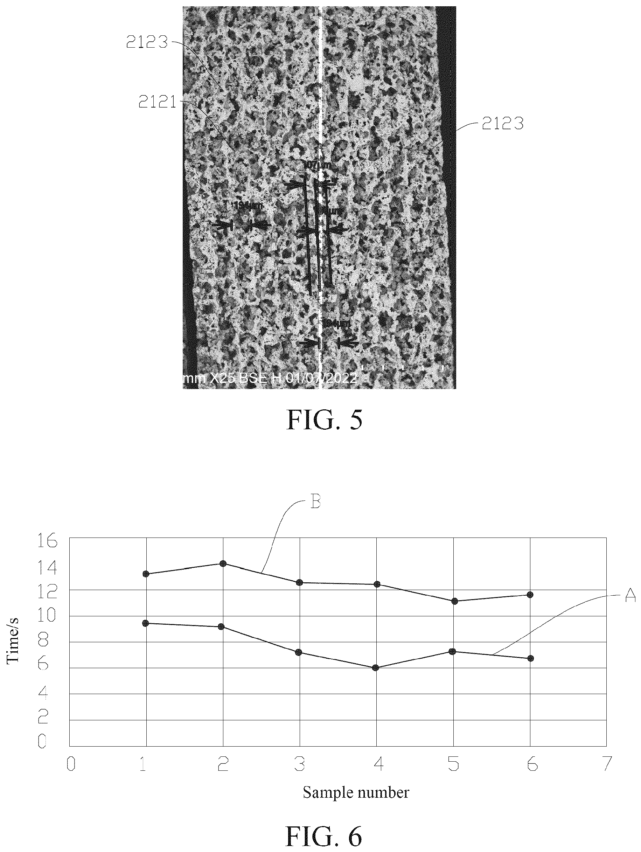

FIG. 5 shows an electron microscope diagram of a porous body 21 according to some embodiments. It may be clearly seen from the figure that the porous body 21 includes a plurality of alternately arranged liquid storage advantage layers 2121 and liquid locking advantage layers 2123, where the thickness of each liquid storage advantage layer 2121 is about 194 µm, and the thickness of each liquid locking advantage layer 2123 is about 20 µm.

FIG. 6 shows a comparison diagram of a rate curve of a liquid guiding test of a porous body 21 with a periodic layered structure and a porous body with a uniform porosity under the condition of the same thickness. In this test, the samples are all rectangular ceramic porous bodies, the test liquid is 30 mg of mung bean ice e-liquid, and the test time is the time when the liquid spreads from a liquid absorbing surface to a vaporization surface of the porous body. As shown in the figure, in different test processes, a liquid guiding rate of the porous body 21 with a periodic multilayer structure (a statistical curve of its liquid guiding rate is A) is significantly better than that of the porous body with a uniform porosity (the statistical curve of its liquid guiding rate is B).

In some embodiments, the porous body 21 may be formed by flow casting or extrusion, and specific examples are as follows:
(1) Flow casting process, the flow casting process itself is suitable for preparing a multilayer structure, and for example: (A) green compacts with different porosities may be flow cast first, and then a periodic layered structure may be prepared by periodically stacking and then co-firing the green compacts; and (B) it is also possible to prepare the periodic layered structure by adjusting a recipe by flowing green compacts with different porosities on the upper and lower sides at once according to the difference in density and particle size of each component in the recipe, thus showing the difference in suspension capabilities in the slurry, and then stacking and co-firing the multilayered green compacts.
(2) Using extrusion molding process, a variety of green compacts with different porosities are extruded by recipe adjustment, and then multilayered green compacts were stacked and co-fired to form the periodic layered structure.
(3) Preparing by combination of a variety of processes, for example, a green compact with a porosity is flow casted first, then a green compact with another porosity is extruded or injection molded, and then a variety of green compacts with different porosities are stacked and co-fired periodically to prepare the periodic layered structure.
(4) Using a coating process, an underlying substrate is a high porosity layer, followed by coating performed on the substrate and secondary sintering to form a surface low porosity layer. According to different porosity requirements, the formulation and molding parameters of the porous substrate material may be adjusted artificially to form a required porous substrate structure with hierarchical pores.

As shown in FIG. 4, in some embodiments, the heating body 23 may be a porous heating film, which may be covered on the first surface of the porous body 21 in communication with the vaporization cavity 11 by means of heating film screen printing, vacuum coating, and the like, that is, the surface of the liquid locking advantage layer 2123, and partially infiltrates into the liquid locking advantage layer 2123.

In some embodiments, according to the test data, when the infiltration ratio of the heating film is higher than 60%, it is easy to encounter a serious e-liquid explosion phenomenon, and when the infiltration ratio is lower than 60%, the e-liquid explosion problem can be significantly alleviated. The following table lists the comparison of the e-liquid explosion test of different types of vaporization cores 20, which also illustrates this point.

| Sample name | Film thickness (exposed part) | Infiltration ratio (accounting for the entire thickness of the heating film) | Vaporization performance |
|---|---|---|---|
| | (Unit: µm) | | |
| AT02 | 22 | 85% | Severe e-liquid explosion |
| T65-1# | 116 | 42% | Slight e-liquid explosion |
| T65-2# | 102 | 45% | Slight e-liquid explosion |

For the heating body 23 laid on the small porosity layer (the liquid locking advantage layer 2123), because the pore size of the small porosity layer (the liquid locking advantage layer 2123) is smaller, the amount of infiltration of the heating body 23 is fewer. The heating body 23 mainly infiltrates into the small porosity layer (the liquid locking advantage layer 2123), and the infiltration ratio is lower than 60%, which may avoid a severe e-liquid explosion phenomenon. In addition, the heating body 23 is a porous heating film, which provides a channel for the vaporization air flow, reduces the operating temperature of the heating body 23, further reduces the generation of e-liquid explosion, and improves the reliability of the product.

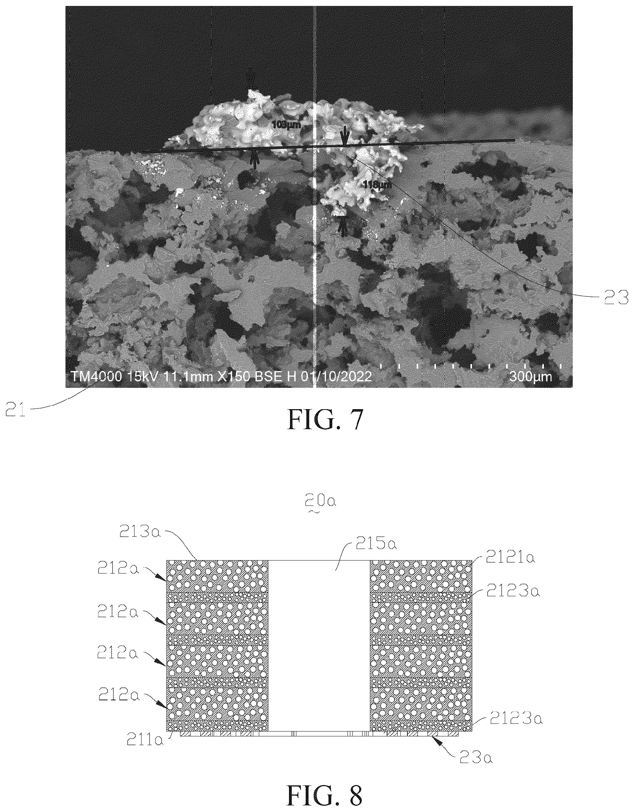

FIG. 7 shows an electron microscope diagram of a vaporization core 20 according to some embodiments of the present invention. As shown in the figure, the thickness of the part of the heating body 23 infiltrating into the porous body 21 is about 118 µm, and the thickness of an exposed part is about 103 µm. The infiltration ratio thereof is about 46.6%, which is less than 60%.

In some embodiments, the molding of the heating body 23 on the porous body 21 may adopt the following methods:
(1) The porous heating film is prepared by screen printing. The heating film slurry has a certain fluidity, and the slurry may infiltrate into the pores of the porous body 21 during printing. Because the pores of the porous body 21 are not straight through holes, there is a certain degree of tortuosity, and hole walls are not smooth, which has resistance to slippery infiltration, the porous body 21 with a low porosity has a greater viscosity resistance of the hole walls and a lower infiltration degree of the heating film; and in addition, the infiltration amount may be regulated by adjusting the fluidity of the heating film material at a high temperature or the viscosity of the slurry at a low temperature. The thickness of the heating body 23 may range from 15 µm to 150 µm, and the thickness of the part of the heating body 23 that infiltrates into the porous body 21 does not exceed 60% of the thickness of the entire porous body 21. The control of the infiltration amount is mainly to reduce the overheating boiling of the e-liquid in the porous body 21, so as to reduce the heat loss and improve the vaporization efficiency.
(2) The porous heating film is prepared on the porous body 21 by a magnetron sputtering coating process. The thickness of the porous heating film may range from 1 µm to 5 µm, and the heating film material may form a small amount of infiltration in the pores of the porous body 21. Therefore, the infiltration part of the heating film generates less heat in the porous body 21, and the energy utilization rate is high; and a small amount of infiltration provides the physical fit between the heating film and the porous body 21, enhances the bonding force between a film and a base, and improves the reliability of the vaporization core 20.

FIG. 8 shows a vaporization core 20a according to some other embodiments of the present invention. The vaporization core 20a may serve as an alternative of the vaporization core 20, including a porous body 21a and a heating body 23a. The porous body 21a is configured to transmit the liquid aerosol-generation substrate in the liquid storage cavity 13 to the heating body 23a. The heating body 23a is arranged on the porous body 21a, and configured to generate a high temperature after being energized, to heat and vaporize the liquid aerosol-generation substrate.

In some embodiments, the porous body 21a may be in a shape of a column, which may include a first surface 211a, a second surface 213a, and a center channel 215a. The first surface 211a may be arranged on a bottom part of the porous body 21a and configured to install the heating body 23a, to form a vaporization surface. The second surface 213a and the first surface 211a are arranged opposite to each other, and the second surface may be arranged on a top end of the porous body 21a, and configured to be in contact with the liquid aerosol-generation substrate to form a liquid absorbing surface. The center channel 215a is provided in the porous body 21a and extends from the first surface 211a to the second surface 213a, to communicate the vaporization cavity 11 with the air outlet channel 15. It may be understood that, the porous body 21a is not limited to the shape of a column, but may also be in a shape of a flat plate.

In some embodiments, the porous body 21a may include n (2□n□30) unit layers 212a, and these unit layers 212a are stacked along a direction from the first surface 211a to the second surface 213a. Each unit layer 212a may include a liquid storage advantage layer 2121a away from the first surface 211a and a liquid locking advantage layer 2123a close to the first surface 211a, so that the liquid storage advantage layer 2121a and the liquid locking advantage layer 2123a of the porous body 21a are alternately arranged, to realize a steeper gradient drop than that of a porous body of the same thickness with a single porosity, so as to provide a stronger heat and mass transfer driving force and provide a faster liquid supplying capability for inhalation.

In some embodiments, the thickness of the porous body 21a (a distance from the first surface 211a to the second surface 213a) may range from 0.8 mm to 3.0 mm, and an average porosity thereof may range from 50% to 75%. The thickness of each unit layer 212a may range from 0.10 mm to 1.5 mm, and the thickness of the liquid locking advantage layer 2123a of each unit layer 212a may range from 10 µm to 200 µm.

In some embodiments, the liquid storage advantage layer 2121a may be a large-pore-size structure layer, and the liquid locking advantage layer 2123a may be a small-pore-size structure layer, where the liquid locking advantage layer 2123a provides the porous body 21a with a stronger support and liquid locking function than the liquid storage advantage layer 2121a; and the liquid storage advantage layer 2121a provides the porous body 21a with functions such us a larger amount of liquid storage, faster liquid supplying, and stronger heat insulation than the liquid locking advantage layer 2123a, so as to reduce heat loss and provide a higher energy utilization rate for the vaporization core 20a.

In some embodiments, an average pore size of the liquid storage advantage layer 2121a is 1.5 to 2.5 times of an average pore size of the liquid locking advantage layer 2123a. In some embodiments, the average pore size of the liquid storage advantage layer 2121a may range from 50 µm to 150 µm, and the average pore size of the liquid locking advantage layer 2123a may range from 20 µm to 100 µm.

In some embodiments, the porous body 21 may be porous alumina ceramic, porous silicon oxide, porous cordierite, porous silicon carbide, porous silicon nitride, porous mullite, or composite porous ceramic formed integrally. It may be understood that the porous body 21 is not limited thereto, and may also be made of other materials suitable for flow casting or coating.

In some embodiments, the porous body 21a may be formed by flow casting or extrusion, and specific examples are as follows:
(1) Flow casting process, the flow casting process itself is suitable for preparing a multilayer structure, and for example: (A) green compacts with different pore sizes may be flow cast first, and then a periodic layered structure may be prepared by periodically stacking and then co-firing the green compacts; and (B) it is also possible to prepare the periodic layered structure by adjusting a recipe by flowing green compacts with different pore sizes on different sides at once according to the difference in density and particle size of each component in the recipe, thus showing the difference in suspension capabilities in the slurry, and then stacking and co-firing the multilayered green compacts.
(2) Using extrusion molding process, a variety of green compacts with different pore sizes are extruded by recipe adjustment, and then multilayered green compacts were stacked and co-fired to form the periodic layered structure.
(3) Preparing by combination of a variety of processes, for example, a green compact with a pore size is flow casted first, then a green compact with another pore size is extruded or injection molded, and then a variety of green compacts with different pore sizes are stacked and co-fired periodically to prepare the periodic layered structure.
(4) Using a coating process, an underlying substrate is a large-pore-size structure layer, followed by coating performed on the substrate and secondary sintering to form a small-pore-size structure layer. According to different pore size requirements, the formulation and molding parameters of the porous body material may be adjusted artificially to form a required porous body structure with hierarchical pore sizes.

In some embodiments, the heating body 23a is at least partially exposed to a lowest end of the porous body 21a and the surface of the liquid locking advantage layer 2123a in communication with the vaporization cavity 11 in an air guiding manner, and the structure and molding method of the heating body 23a may be the same as those of the heating body 23, which are not described herein again.

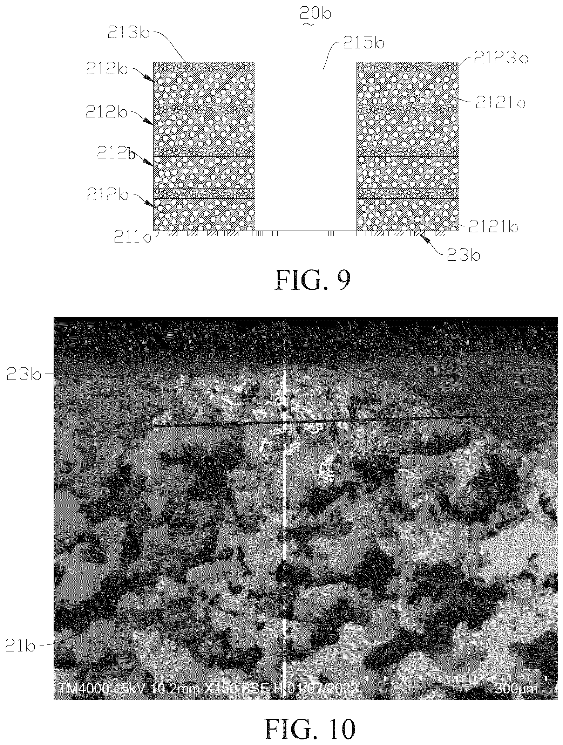

FIG. 9 shows a vaporization core 20b according to still some other embodiments of the present invention. The vaporization core 20b may serve as an alternative of the vaporization core 20, including a porous body 21b and a heating body 23b. The porous body 21b is configured to transmit the liquid aerosol-generation substrate in the liquid storage cavity 13 to the heating body 23b. The heating body 23b is arranged on the porous body 21b, and configured to generate a high temperature after being energized, to heat and vaporize the liquid aerosol-generation substrate.

In some embodiments, the porous body 21b may be in a shape of a column, which may include a first surface 211b, a second surface 213b, and a center channel 215b. The first surface 211b is arranged on a bottom part of the porous body 21b and configured to install the heating body 23b, to form a vaporization surface. The second surface 213b and the first surface 211b are arranged opposite to each other on the top end of the porous body 21b, and the second surface is configured to be in contact with the liquid aerosol-generation substrate to form a liquid absorbing surface. The center channel 215b is provided in the porous body 21b and extends from the first surface 211b to the second surface 213b, to communicate the vaporization cavity 11 with the air outlet channel 15. It may be understood that, the porous body 21b is not limited to the shape of a column, but may also be in a shape of a flat plate.

In some embodiments, the porous body 21b may be porous alumina ceramic, porous silicon oxide, porous cordierite, porous silicon carbide, porous silicon nitride, porous mullite, or composite porous ceramic formed integrally. However, the porous body is not limited thereto, and may also be other materials suitable for flow casting or coating. The thickness of the porous body 21b may range from 0.8 mm to 3.0 mm, and an average porosity thereof may range from 50% to 75%. In some embodiments, the porous body 21b may be a periodic layered structure, which may include n (2≤n≤30) unit layers 212b, where the thickness of each unit layer 212b may range from 0.1 mm to 1.5 mm, and each unit layer 212b may include a liquid storage advantage layer 2121b close to the first surface 211b and a liquid locking advantage layer 2123b away from the first surface 211b, which are configured to reduce a liquid supplying path, to provide a faster liquid supplying capability for inhalation. In some embodiments, the thickness of the liquid locking advantage layer 2123b may range from 10 µm to 200 µm.

In some embodiments, the liquid storage advantage layer 2121b may be a large-pore-size structure layer, and the liquid locking advantage layer 2123b may be a small-pore-size structure layer, where the liquid locking advantage layer 2123b provides the porous body 21b with a stronger support and liquid locking function than the liquid storage advantage layer 2121b; and the liquid storage advantage layer 2121b provides the porous body 21b with functions such us a larger amount of liquid storage, faster liquid supplying, and stronger heat insulation than the liquid locking advantage layer 2123b, so as to reduce heat loss and provide a higher energy utilization rate for the vaporization core 20b. In some embodiments, an average pore size of the liquid storage advantage layer 2121b is 1.5 to 2.5 times of an average pore size of the liquid locking advantage layer 2123b.

In some embodiments, under the condition of the same thickness, a gradient drop of a porous body with a uniform pore size is flat, and a porous body 21b of a periodic n-layered (n is more than or equal to 2) structure can realize a steeper gradient drop, to provide a stronger heat and mass transfer driving force.

As shown in FIG. 9, in some embodiments, the heating body 23b may be a porous heating film, which can be covered on the surface of the liquid storage advantage layer 2121b of the unit layer 212b close to the first surface 211b by means of heating film screen printing, vacuum coating, and the like, and partially infiltrate into the liquid storage advantage layer 2121b. For the heating body 23b laid on the liquid storage advantage layer 2121b, considering that the average pore size of the liquid storage advantage layer 2121b is larger, the liquid storage capability is strong, and the infiltration of the heating body 23b is easier. In order to ensure that the e-liquid is fully vaporized, and reduce the energy transmission of the heating body 23b to the part of e-liquid that cannot be vaporized, to reduce e-liquid explosion, the thickness of the liquid storage advantage layer 2121b may be limited from 0.1 mm to 1.70 mm, so that the heating body 23b realizes high vaporization efficiency. The structure and molding method of the heating body 23b may be the same as those of the heating body 23, and details are not described herein again.

FIG. 10 shows an electron microscope diagram of a vaporization core 20b according to some embodiments. As shown in the figure, the maximum depth of the part of the heating body 23b infiltrating into the porous body 21 is about 105 µm, and the thickness of an exposed part is about 89.3 µm. The infiltration ratio thereof is about 54%, which is less than 60%.

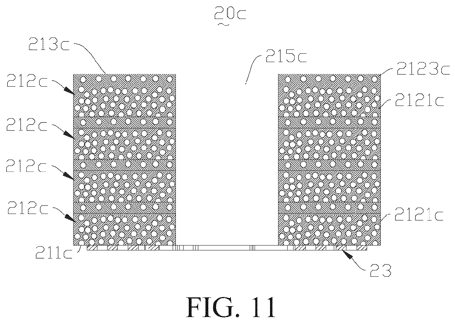

FIG. 11 shows a vaporization core 20c according to yet some other embodiments of the present invention. The vaporization core 20c may serve as an alternative of the vaporization core 20, including a porous body 21c and a heating body 23c. The porous body 21c is configured to transmit the liquid aerosol-generation substrate in the liquid storage cavity 13 to the heating body 23c. The heating body 23c is arranged on the porous body 21c, and configured to generate a high temperature after being energized, to heat and vaporize the liquid aerosol-generation substrate.

In some embodiments, the porous body 21c may be in a shape of a column, which may include a first surface 211c, a second surface 213c, and a center channel 215c. The first surface 211c is arranged on a bottom part of the porous body 21c and configured to install the heating body 23c, to form a vaporization surface. The second surface 213c and the first surface 211c are arranged opposite to each other on the top end of the porous body 21c, and the second surface is configured to be in contact with the liquid aerosol-generation substrate to form a liquid absorbing surface. The center channel 215c is arranged in the porous body 21c and extends from the first surface 211c to the second surface 213c, to communicate the vaporization cavity 11 with the air outlet channel 15. It may be understood that, the porous body 21c is not limited to the shape of a column, but may also be in a shape of a flat plate.

In some embodiments, the porous body 21c may be porous alumina ceramic, porous silicon oxide, porous cordierite, porous silicon carbide, porous silicon nitride, porous mullite, or composite porous ceramic formed integrally. However, the porous body not limited thereto, and may also be other materials suitable for flow casting or coating. The thickness of the porous body 21c may range from 0.8 mm to 3.0 mm, and an average porosity thereof may range from 50% to 75%. In some embodiments, the porous body 21c may be a periodic layered structure, which may include n (2≤n≤30) unit layers 212c, where the thickness of each unit layer 212c may range from 0.10 mm to 1.5 mm, and each unit layer 212c may include a liquid storage advantage layer 2121c close to the first surface 211c and a liquid locking advantage layer 2123c away from the first surface 211c, which are configured to reduce a liquid supplying path, to provide a faster liquid supplying capability for inhalation. In some embodiments, the thickness of the liquid locking advantage layer 2123 may range from 10 µm to 200 µm.

In some embodiments, the liquid storage advantage layer 2121c may be a high porosity layer, and the liquid locking advantage layer 2123c may be a low porosity layer, where the liquid locking advantage layer 2123c provides the porous body 21c with a stronger support and liquid locking function than the liquid storage advantage layer 2121c; and the liquid storage advantage layer 2121c provides the porous body 21c with functions such us a larger amount of liquid storage, faster liquid supplying, and stronger heat insulation than the liquid locking advantage layer 2123c, so as to reduce heat loss and provide a higher energy utilization rate for the vaporization core 20c. In some embodiments, a porosity of the liquid storage advantage layer 2121c is 1.2 to 2 times of a porosity of the liquid locking advantage layer 2123c. Specifically, the porosity of the liquid storage advantage layer 2121c may range from 55% to 90%, and the porosity of the liquid locking advantage layer 2123c may range from 45% to 70%. In some embodiments, under the condition of the same thickness, a gradient drop of a porous body with a uniform porosity is flat, and a porous body of a periodic n-layered (n is greater than or equal to 2) structure can realize a steeper gradient drop, to provide a stronger heat and mass transfer driving force.

As shown in FIG. 11, in some embodiments, the heating body 23c may be a porous heating film, which may be covered on the surface of the liquid storage advantage layer 2121c of the unit layer 212c close to the first surface 211c by means of heating film screen printing, vacuum coating, and the like, and partially infiltrate into the liquid storage advantage layer 2121c. For the heating body 23c laid on the liquid storage advantage layer 2121c, considering that the porosity of the liquid storage advantage layer 2121c is higher, the liquid storage capability is strong, and the infiltration of the heating body 23c is easier. In order to ensure that the e-liquid is fully vaporized, and reduce the energy transmission of the heating body 23b to the part of e-liquid that cannot be vaporized, to reduce e-liquid explosion, the thickness of the liquid storage advantage layer 2121c may be limited from 0.1 mm to 1.70 mm, so that the heating body 23c realizes high vaporization efficiency. The structure and molding method of the heating body 23c may be the same as those of the heating body 23, and details are not described herein again.

## Claims

1. A porous body (21, 21a, 21b, 21c) for an electronic vaporization device (1), comprising:
a first surface (211, 211a, 211b, 211c);
a second surface (213, 213a, 213b, 213c) opposite to the first surface (211, 211a, 211b, 211c); and
at least two unit layers (212, 212a, 212b, 212c) sequentially arranged along the direction from the first surface (211, 211a, 211b, 211c) to the second surface (213, 213a, 213b, 213c),
wherein one unit layer (212, 212a, 212b, 212c) of the at least two unit layers (212, 212a, 212b, 212c) comprises at least a liquid storage advantage layer (2121, 2121a, 2121b, 2121c) or a liquid locking advantage layer (2123, 2123a, 2123b, 2123c), and
wherein each other unit layer (212, 212a, 212b, 212c) of the at least two unit layers (212, 212a, 212b, 212c) comprises the liquid storage advantage layer (2121, 2121a, 2121b, 2121c) and the liquid locking advantage layer (2123, 2123a, 2123b, 2123c) combined with the liquid storage advantage layer (2121, 2121a, 2121b, 2121c),
wherein the liquid storage advantage layer (2121, 2121a, 2121b, 2121c) comprises a large-pore-size structure layer,
wherein the liquid locking advantage layer (2123, 2123a, 2123b, 2123c) comprises a small-pore-size structure layer, and
wherein the liquid storage advantage layers (2121, 2121a, 2121b, 2121c) and the liquid locking advantage layers (2123, 2123a, 2123b, 2123c) of the at least two unit layers (212, 212a, 212b, 212c) are alternately combined along the direction from the first surface (211, 211a, 211b, 211c) to the second surface (213, 213a, 213b, 213c).

2. The porous body (21, 21a, 21b, 21c) of claim 1, wherein each unit layer (212, 212a, 212b, 212c) of the at least two unit layers (212, 212a, 212b, 212c) comprises the liquid storage advantage layer (2121, 2121a, 2121b, 2121c) and the liquid locking advantage layer (2123, 2123a, 2123b, 2123c) combined with the liquid storage advantage layer (2121, 2121a, 2121b, 2121c).

3. The porous body (21, 21a, 21b, 21c) of claim 1, wherein the thickness of the liquid locking advantage layer (2123, 2123a, 2123b, 2123c) ranges from 10 µm to 200 µm.

4. The porous body (21, 21a, 21b, 21c) of claim 1, wherein the thickness of the porous body (21, 21a, 21b, 21c) ranges from 0.8 mm to 3.0 mm.

5. The porous body (21, 21a, 21b, 21c) of claim 1, wherein the average porosity of the porous body (21, 21a, 21b, 21c) ranges from 50% to 75%.

6. The porous body (21, 21a, 21b, 21c) of claim 1, wherein the thickness of each unit layer (212, 212a, 212b, 212c) ranges from 0.1 mm to 1.5 mm.

7. The porous body (21, 21a, 21b, 21c) of claim 1,
wherein the average pore size of the large-pore-size structure layer is 1.5 to 2.5 times of the average pore size of the small-pore-size structure layer.

8. The porous body (21, 21a, 21b, 21c) of claim 1,
wherein the average pore size of the large-pore-size structure layer ranges from 50 µm to 150 µm, and
wherein the average pore size of the small-pore-size structure layer ranges from 20 µm to 100 µm.

9. The porous body (21, 21a, 21b, 21c) of claim 1, wherein the liquid storage advantage layer (2121, 2121a, 2121b, 2121c) comprises a high porosity layer,
wherein the liquid locking advantage layer (2123, 2123a, 2123b, 2123c) comprises a low porosity layer, and
wherein the porosity of the high porosity layer is 1.2 to 2 times of the porosity of the low porosity layer.

10. The porous body (21, 21a, 21b, 21c) of claim 1, wherein the liquid storage advantage layer (2121, 2121a, 2121b, 2121c) comprises a high porosity layer,
wherein the liquid locking advantage layer (2123, 2123a, 2123b, 2123c) comprises a low porosity layer,
wherein the porosity of the high porosity layer ranges from 55% to 90%, and
wherein the porosity of the low porosity layer ranges from 45% to 70%.

11. A manufacturing method of the porous body (21, 21a, 21b, 21c) of any one of claims 1 to 10, comprising:
providing at least two pairs of green compacts with different porosities or different pore sizes;
stacking the at least two pairs of green compacts alternately to form a green compact assembly; and
co-firing the green compact assembly to form the porous body (21, 21a, 21b, 21c) that is integrated.

12. The manufacturing method of claim 11, wherein the at least two pairs of green compacts are formed by flow casting or extrusion.

13. The manufacturing method of claim 11, wherein at least some of the at least two pairs of green compacts are formed by flow casting, and at least some of the at least two pairs of green compacts are formed by extrusion or injection molding.

14. A vaporization core (20, 20a, 20b, 20c) for an electronic vaporization device (1), comprising:
a heating body (23, 23a, 23b, 23c); and
the porous body (21, 21a, 21b, 21c) of any one of claims 1 to 10,
wherein the heating body (23, 23a, 23b, 23c) is arranged on the first surface (211, 211a, 211b, 211c) of the porous body (21, 21a, 21b, 21c).

15. An electronic vaporization device (1), comprising:
a liquid storage cavity (13);
a vaporization cavity (11); and
the vaporization core (20, 20a, 20b, 20c) of claim 14,
wherein the surface of the porous body (21, 21a, 21b, 21c) on which the heating body (23, 23a, 23b, 23c) is arranged is in communication with the vaporization cavity (11) in an air guiding manner, and
wherein the other surface of the porous body (21, 21a, 21b, 21c) opposite to the surface on which the heating body (23, 23a, 23b, 23c) is arranged is in communication with the liquid storage cavity (13) in a liquid guiding manner.

## Patentansprüche

1. Poröser Körper (21, 21a, 21b, 21c) für eine elektronische Verdampfungsvorrichtung (1), umfassend:
eine erste Oberfläche (211, 211a, 211b, 211c);
eine zweite Oberfläche (213, 213a, 213b, 213c), die der ersten Oberfläche (211, 211a, 211b, 211c) gegenüberliegend ist; und
mindestens zwei Einheitsschichten (212, 212a, 212b, 212c), die aufeinanderfolgend entlang der Richtung von der ersten Oberfläche (211, 211a, 211b, 211c) zu der zweiten Oberfläche (213, 213a, 213b, 213c) angeordnet sind,
wobei eine Einheitsschicht (212, 212a, 212b, 212c) der mindestens zwei Einheitsschichten (212, 212a, 212b, 212c) mindestens eine Flüssigkeitsspeichervorteilsschicht (2121, 2121a, 2121b, 2121c) oder eine Flüssigkeitsverriegelungsvorteilsschicht (2123, 2123a, 2123b, 2123c) umfasst, und
wobei jede andere Einheitsschicht (212, 212a, 212b, 212c) der mindestens zwei Einheitsschichten (212, 212a, 212b, 212c) die Flüssigkeitsspeichervorteilsschicht (2121, 2121a, 2121b, 2121c) und die mit der Flüssigkeitsspeichervorteilsschicht (2121, 2121a, 2121b, 2121c) kombinierte Flüssigkeitsverriegelungsvorteilsschicht (2123, 2123a, 2123b, 2123c) umfasst,
wobei die Flüssigkeitsspeichervorteilsschicht (2121, 2121a, 2121b, 2121c) eine Großporenstrukturschicht umfasst,
wobei die Flüssigkeitsverriegelungsvorteilsschicht (2123, 2123a, 2123b, 2123c) eine Kleinporenstrukturschicht umfasst, und wobei die Flüssigkeitsspeichervorteilsschichten (2121, 2121a, 2121b, 2121c) und die Flüssigkeitsverriegelungsvorteilsschichten (2123, 2123a, 2123b, 2123c) der mindestens zwei Einheitsschichten (212, 212a, 212b, 212c) entlang der Richtung von der ersten Oberfläche (211, 211a, 211b, 211c) zu der zweiten Oberfläche (213, 213a, 213b, 213c) abwechselnd kombiniert sind.

2. Poröser Körper (21, 21a, 21b, 21c) nach Anspruch 1, wobei jede Einheitsschicht (212, 212a, 212b, 212c) der mindestens zwei Einheitsschichten (212, 212a, 212b, 212c) die Flüssigkeitsspeichervorteilsschicht (2121, 2121a, 2121b, 2121c) und die mit der Flüssigkeitsspeichervorteilsschicht (2121, 2121a, 2121b, 2121c) kombinierte Flüssigkeitsverriegelungsvorteilsschicht (2123, 2123a, 2123b, 2123c) umfasst.

3. Poröser Körper (21, 21a, 21b, 21c) nach Anspruch 1, wobei die Dicke der Flüssigkeitsverriegelungsvorteilsschicht (2123, 2123a, 2123b, 2123c) von 10 µm bis 200 µm reicht.

4. Poröser Körper (21, 21a, 21b, 21c) nach Anspruch 1, wobei die Dicke des porösen Körpers (21, 21a, 21b, 21c) von 0,8 mm bis 3,0 mm reicht.

5. Poröser Körper (21, 21a, 21b, 21c) nach Anspruch 1, wobei die durchschnittliche Porosität des porösen Körpers (21, 21a, 21b, 21c) von 50 % bis 75 % reicht.

6. Poröser Körper (21, 21a, 21b, 21c) nach Anspruch 1, wobei die Dicke jeder Einheitsschicht (212, 212a, 212b, 212c) von 0,1 mm bis 1,5 mm reicht.

7. Poröser Körper (21, 21a, 21b, 21c) nach Anspruch 1,
wobei die durchschnittliche Porengröße der Großporenstrukturschicht das 1,5- bis 2,5-Fache der durchschnittlichen Porengröße der Kleinporenstrukturschicht beträgt.

8. Poröser Körper (21, 21a, 21b, 21c) nach Anspruch 1,
wobei die durchschnittliche Porengröße der Großporenstrukturschicht von 50 µm bis 150 µm reicht, und wobei die durchschnittliche Porengröße der Kleinporenstrukturschicht von 20 µm bis 100 µm reicht.

9. Poröser Körper (21, 21a, 21b, 21c) nach Anspruch 1, wobei die Flüssigkeitsspeichervorteilsschicht (2121, 2121a, 2121b, 2121c) eine Hochporositätsschicht umfasst,
wobei die Flüssigkeitsverriegelungsvorteilsschicht (2123, 2123a, 2123b, 2123c) eine Niedrigporositätsschicht umfasst, und wobei die Porosität der Hochporositätsschicht das 1,2- bis 2-Fache der Porosität der Niedrigporositätsschicht beträgt.

10. Poröser Körper (21, 21a, 21b, 21c) nach Anspruch 1, wobei die Flüssigkeitsspeichervorteilsschicht (2121, 2121a, 2121b, 2121c) eine Hochporositätsschicht umfasst,
wobei die Flüssigkeitsverriegelungsvorteilsschicht (2123, 2123a, 2123b, 2123c) eine Niedrigporositätsschicht umfasst, wobei die Porosität der Hochporositätsschicht von 55 % bis 90 % reicht, und
wobei die Porosität der Niedrigporositätsschicht von 45 % bis 70 % reicht.

11. Herstellungsverfahren des porösen Körpers (21, 21a, 21b, 21c) nach einem der Ansprüche 1 bis 10, umfassend:
Bereitstellen von mindestens zwei Paaren von Grünlingen mit unterschiedlichen Porositäten oder unterschiedlichen Porengrößen;
Stapeln der mindestens zwei Paare von Grünlingen abwechselnd zum Bilden einer Grünlingsbaugruppe; und
Cobrennen der Grünlingsbaugruppe zum Bilden des porösen Körpers (21, 21a, 21b, 21c), der integriert ist.

12. Herstellungsverfahren nach Anspruch 11, wobei die mindestens zwei Paare von Grünlingen durch Fließgießen oder Extrusion gebildet sind.

13. Herstellungsverfahren nach Anspruch 11, wobei mindestens einige der mindestens zwei Paare von Grünlingen durch Fließgießen gebildet sind und mindestens einige der mindestens zwei Paare von Grünlingen durch Extrusion oder Spritzgießen gebildet sind.

14. Verdampfungskern (20, 20a, 20b, 20c) für eine elektronische Verdampfungsvorrichtung (1), umfassend:
einen Heizkörper (23, 23a, 23b, 23c); und
den porösen Körper (21, 21a, 21b, 21c) nach einem der Ansprüche 1 bis 10,
wobei der Heizkörper (23, 23a, 23b, 23c) auf der ersten Oberfläche (211, 211a, 211b, 211c) des porösen Körpers (21, 21a, 21b, 21c) angeordnet ist.

15. Elektronische Verdampfungsvorrichtung (1), umfassend:
einen Flüssigkeitsspeicherhohlraum (13);
einen Verdampfungshohlraum (11); und
den Verdampfungskern (20, 20a, 20b, 20c) nach Anspruch 14, wobei die Oberfläche des porösen Körpers (21, 21a, 21b, 21c), auf der der Heizkörper (23, 23a, 23b, 23c) angeordnet ist, in Verbindung mit dem Verdampfungshohlraum (11) auf luftführende Weise steht, und
wobei die andere Oberfläche des porösen Körpers (21, 21a, 21b, 21c), die der Oberfläche, auf der der Heizkörper (23, 23a, 23b, 23c) angeordnet ist, gegenüberliegend ist, in Verbindung mit dem Flüssigkeitsspeicherhohlraum (13) auf flüssigkeitsführende Weise steht.

## Revendications

1. Corps poreux (21, 21a, 21b, 21c) pour un dispositif de vaporisation électronique (1), comprenant :
une première surface (211, 211a, 211b, 211c) ;
une seconde surface (213, 213a, 213b, 213c) opposée à la première surface (211, 211a, 211b, 211c) ; et
au moins deux couches unitaires (212, 212a, 212b, 212c) disposées séquentiellement le long de la direction à partir de la première surface (211, 211a, 211b, 211c) vers la seconde surface (213, 213a, 213b, 213c),
dans lequel une couche unitaire (212, 212a, 212b, 212c) des au moins deux couches unitaires (212, 212a, 212b, 212c) comprend au moins une couche avantageuse de stockage de liquide (2121, 2121a, 2121b, 2121c) ou une couche avantageuse de rétention de liquide (2123, 2123a, 2123b, 2123c), et
dans lequel chaque autre couche unitaire (212, 212a, 212b, 212c) des au moins deux couches unitaires (212, 212a, 212b, 212c) comprend la couche avantageuse de stockage de liquide (2121, 2121a, 2121b, 2121c) et la couche avantageuse de rétention de liquide (2123, 2123a, 2123b, 2123c) combinée avec la couche avantageuse de stockage de liquide (2121, 2121a, 2121b, 2121c), dans lequel la couche avantageuse de stockage de liquide (2121, 2121a, 2121b, 2121c) comprend une couche à structure à pores de grande taille,
dans lequel la couche avantageuse de rétention de liquide (2123, 2123a, 2123b, 2123c) comprend une couche à structure à pores de petite taille, et
dans lequel les couches avantageuses de stockage de liquide (2121, 2121a, 2121b, 2121c) et les couches avantageuses de rétention de liquide (2123, 2123a, 2123b, 2123c) des au moins deux couches unitaires (212, 212a, 212b, 212c) sont combinées alternativement le long de la direction à partir de la première surface (211, 211a, 211b, 211c) vers la seconde surface (213, 213a, 213b, 213c).

2. Corps poreux (21, 21a, 21b, 21c) selon la revendication 1, dans lequel chaque couche unitaire (212, 212a, 212b, 212c) des au moins deux couches unitaires (212, 212a, 212b, 212c) comprend la couche avantageuse de stockage de liquide (2121, 2121a, 2121b, 2121c) et la couche avantageuse de rétention de liquide (2123, 2123a, 2123b, 2123c) combinée avec la couche avantageuse de stockage de liquide (2121, 2121a, 2121b, 2121c).

3. Corps poreux (21, 21a, 21b, 21c) selon la revendication 1, dans lequel l'épaisseur de la couche avantageuse de rétention de liquide (2123, 2123a, 2123b, 2123c) est comprise dans une plage allant de 10 µm à 200 µm.

4. Corps poreux (21, 21a, 21b, 21c) selon la revendication 1, dans lequel l'épaisseur du corps poreux (21, 21a, 21b, 21c) est comprise dans une plage allant de 0,8 mm à 3,0 mm.

5. Corps poreux (21, 21a, 21b, 21c) selon la revendication 1, dans lequel la porosité moyenne du corps poreux (21, 21a, 21b, 21c) est comprise dans une plage allant de 50 % à 75 %.

6. Corps poreux (21, 21a, 21b, 21c) selon la revendication 1, dans lequel l'épaisseur de chaque couche unitaire (212, 212a, 212b, 212c) est comprise dans une plage allant de 0,1 mm à 1,5 mm.

7. Corps poreux (21, 21a, 21b, 21c) selon la revendication 1, dans lequel la taille moyenne de pores de la couche à structure à pores de grande taille est de 1,5 à 2,5 fois la taille moyenne de pores de la couche à structure à pores de petite taille.

8. Corps poreux (21, 21a, 21b, 21c) selon la revendication 1, dans lequel la taille moyenne de pores de la couche à structure à pores de grande taille est comprise dans une plage allant de 50 µm à 150 µm, et
dans lequel la taille moyenne de pores de la couche à structure à pores de petite taille est comprise dans une plage allant de 20 µm à 100 µm.

9. Corps poreux (21, 21a, 21b, 21c) selon la revendication 1, dans lequel la couche avantageuse de stockage de liquide (2121, 2121a, 2121b, 2121c) comprend une couche à haute porosité,
dans lequel la couche avantageuse de rétention de liquide (2123, 2123a, 2123b, 2123c) comprend une couche à basse porosité, et
dans lequel la porosité de la couche à haute porosité est de 1,2 à 2 fois la porosité de la couche à basse porosité.

10. Corps poreux (21, 21a, 21b, 21c) selon la revendication 1, dans lequel la couche avantageuse de stockage de liquide (2121, 2121a, 2121b, 2121c) comprend une couche à haute porosité,
dans lequel la couche avantageuse de rétention de liquide (2123, 2123a, 2123b, 2123c) comprend une couche à basse porosité,
dans lequel la porosité de la couche à haute porosité est comprise dans une plage allant de 55 % à 90 %, et
dans lequel la porosité de la couche à basse porosité est comprise dans une plage allant de 45 % à 70 %.

11. Procédé de fabrication du corps poreux (21, 21a, 21b, 21c) selon l'une quelconque des revendications 1 à 10, comprenant :
la fourniture d'au moins deux paires de comprimés crus présentant des porosités différentes ou des tailles de pores différentes ;
l'empilement alternatif des au moins deux paires de comprimés crus afin de former un ensemble comprimé cru ; et
la co-cuisson de l'ensemble comprimé cru afin de former le corps poreux (21, 21a, 21b, 21c) qui est intégré.

12. Procédé de fabrication selon la revendication 11, dans lequel les au moins deux paires de comprimés crus sont formés par coulée en flux ou par extrusion.

13. Procédé de fabrication selon la revendication 11, dans lequel au moins certaines des au moins deux paires de comprimés crus sont formées par coulée en flux, et au moins certaines des au moins deux paires de comprimés crus sont formées par extrusion ou par moulage par injection.

14. Noyau de vaporisation (20, 20a, 20b, 20c) pour un dispositif de vaporisation électronique (1), comprenant :
un corps chauffant (23, 23a, 23b, 23c) ; et
le corps poreux (21, 21a, 21b, 21c) selon l'une quelconque des revendications 1 à 10,
dans lequel le corps chauffant (23, 23a, 23b, 23c) est disposé sur la première surface (211, 211a, 211b, 211c) du corps poreux (21, 21a, 21b, 21c).

15. Dispositif de vaporisation électronique (1), comprenant :
une cavité de stockage de liquide (13) ;
une cavité de vaporisation (11) ; et
le noyau de vaporisation (20, 20a, 20b, 20c) selon la revendication 14,
dans lequel la surface du corps poreux (21, 21a, 21b, 21c) sur laquelle le corps chauffant (23, 23a, 23b, 23c) est disposé est en communication avec la cavité de vaporisation (11) de manière à guider de l'air, et
dans lequel l'autre surface du corps poreux (21, 21a, 21b, 21c) opposée à la surface sur laquelle le corps chauffant (23, 23a, 23b, 23c) est disposé est en communication avec la cavité de stockage de liquide (13) de manière à guider du liquide.
